# EUROPEAN PATENT SPECIFICATION

(11) **EP 3 284 916 B1**
(45) Date of publication and mention of the grant of the patent: **07.10.2020**
(21) Application number: 17184862.5
(22) Date of filing: 04.08.2017
(51) Int. Cl.: F01D 11/12, B22F 3/105, B22F 5/00

(54) **A COMPONENT FOR A GAS TURBINE ENGINE AND METHOD OF MANUFACTURE**
KOMPONENTE FÜR EINEN GASTURBINENMOTOR UND VERFAHREN ZUR HERSTELLUNG
COMPOSANT POUR UN MOTEUR À TURBINE À GAZ ET PROCÉDÉ DE FABRICATION

(30) Priority: 17.08.2016 GB 201614070
(43) Date of publication of application: 21.02.2018
(73) Proprietor: Rolls-Royce plc, London N1 9FX (GB)
(72) Inventor: Mason-Flucke, Julian, Derby, Derbyshire DE24 8BJ (GB); Jones, Simon, Derby, Derbyshire DE24 8BJ (GB)
(74) Representative: Rolls-Royce plc

(56) References cited:
- EP-A1- 3 018 296
- GB-A- 1 361 814
- US-A- 3 844 011

## Description

### Field of the Invention

The present invention relates to a component manufactured using an additive layer process for a gas turbine engine. The component may be a seal segment of a turbine rotor.

### Background of the Invention

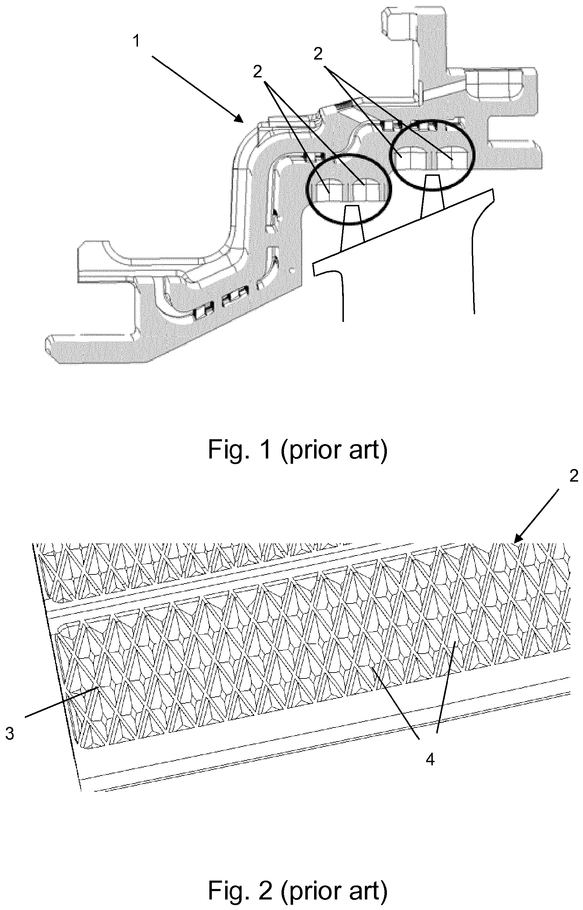

Existing outer static segmented parts of the main gas flow path wall 1 of a gas turbine engine (such as the example segment shown in Figure 1) have an abradable land 2 to allow the fin tips on the blades to rub into them without significant damage to the blade. These are conventionally formed by electro-discharge machining (EDM) a lattice-shaped pattern 3 into the two abradable lands 2, for example as shown in Figure 2, and then filling these diamond-shaped "pockets" 4 with a lower-density sinter powder before treating in a furnace. This yields two abradable lands 2 with a lower overall density than the parent material, but similar oxidation resistance properties. This reduced density provides the "abradability" of the land and is crucial to the system performance.

A method of manufacturing an abradable honeycomb in a single step from powder deposition and laser sintering is disclosed in European patent application EP 3018296 A1. In this the laser processing can be done at different energy densities to produce different sinter densities of the abradable. An alternative method is discussed in United Kingdom patent application GB 1361814 A in which the honeycomb is made from a compacted powder before being sintered. A similar process is also disclosed in United States patent US 3844011.

However, abradable honeycomb lands are difficult to machine, requiring complex EDM electrodes, and as a result both add cost and limit the available supply chain. The subsequent sinter operation also adds cost, and often has to be carried out off-site from a supplier.

Despite the replacement of base material with higher-porosity sinter powder, there is still substantial wear seen on blade fin tips, leading to them often having to be re-coated, and there have been issues in service with powder falling out, leading to an increase in over-tip leakage and associated performance degradation.

Abradable honeycomb lands are also historically very hard to actively cool, due to the sinter-powder filling between honeycombs making any subsequent machining/drilling very difficult. In addition, the distance between the gas washed surface of a honeycomb abradable land and an active cooling system located behind it can get very large, requiring increased cooling flows to remove the sufficient heat to keep surface temperatures down.

In addition to this, as oxidation attacks the abradable surface, and with deep blade rubs, degradation of this surface occurs, leading to increased overtip leakage to the blade. There is no way to adjust the cooling flow during running to slow this attack and therefore maintain performance.

Oxidation in this area of an engine is the life-limiting feature for most of the known seal segments on large civil engines, and if modifications can be made which address this then lifecycle costs could be improved.

The present invention seeks to address some of the aforementioned problems.

### Statements of the Invention

The present invention provides a method of manufacturing a component according to the appended claims.

Described below is a method of manufacturing a component for a gas turbine engine, the method including the step of: forming a metallic body of a component by: depositing successive layers of a metal powder on a bed; progressively forming the shape of the metallic body within the layers of powder by selectively fusing particles of the metal powder after each layer has been deposited, exposing the body to a heat treatment to fuse the particles of the powder within the pocket together, wherein forming the shape of the metallic body includes creating an enclosed pocket of unfused particles within the successive layers, the pocket being defined by walls of fused particles so that the metallic body has a first density outside of the pocket and a second density which is lower than the first density within the pocket.

Providing an enclosed pocket of lower density particles within the body provides a portion which is suited to being an abradable liner. The component may provide the boundary wall of the main gas part and may be located on the radially outer of the turbine blade tip. Hence, the pocket of lower density particles may provide a track liner against which the blade tip can rub in service to provide a close tolerant fit. The invention is ideally suited to an additive layer process where the lower density pocket can be provided by unfused particles enclosed within a body of fused particles.

The pocket may further include an external wall defining an internal volume and a tubular wall having an interior surface and an exterior surface. The interior surface may provide a tubular cavity which may extend at least partially into the internal volume of the pocket.

The tubular cavity may extend fully through the pocket. The tubular cavity may taper along its length.

The selective fusing of particles may be achieved using a laser.

The fused particles of the pocket may be formed as part of a lattice of intersecting walls.

The pocket may be enclosed on all sides by the walls and at least one side of the pocket provides an external surface of the in use component. The wall which provides the external surface may be between 0.1mm and 0.3 mm thick.

The pocket may have a radial depth of between 0.4mm and 5mm.

The walls may be longitudinal with a longitudinal axis extending at a minimum angle of 45 degrees from the bed.

The second density may be between 40 and 60% of the first density.

The walls may have a nominal thickness of between 0.1mm and 0.3mm.

The pockets may be approximately 3mm wide.

Also described below is a component for a gas turbine engine, which comprises: a metallic body including layers of fused particles and an enclosed pocket of further particles within the body. The pocket may be defined by solid walls provided by the layers of fused particles. The solid walls may have a first density and the enclosed pocket of further particles have a second density and wherein the first density is higher than the second density.

Providing an enclosed pocket of lower density particles within the body provides a portion which is suited to being an abradable liner. The component may provide the boundary wall of the main gas part and may be located on the radially outer of the turbine blade tip. Hence, the pocket of lower density particles may provide a track liner against which the blade tip can rub in service to provide a close tolerant fit. The invention is ideally suited to an additive layer process where the lower density pocket can be provided by unfused particles enclosed within a body of fused particles.

The further particles within the pocket may have a uniform density throughout the pocket. The material of the particles within the pocket may be same as the material used to create the walls. The further particles may be unfused in a first state prior to a heat treatment, and fused together in a second state post the heat treatment.

The particles within the pocket may be fused together. The fusion of the particles within the pocket is achieved in a post build process. That is, once the pocket walls have been manufactured and using a different method of fusing to that which was used to build the pocket walls. The fusion of the pocket particles may be achieved with a post build heat treatment.

The solid walls of the pocket may form part of a lattice of intersecting walls. The pocket may be enclosed on all sides by the solid walls and at least one side of the pocket provides an external surface of the in use component. The external surface may be provided by a solid wall. The external solid wall may have the thinnest lateral section than any of the walls. The lateral section may be a radial section when the component provides a boundary wall of turbine rotor section of a gas turbine engine.

The pocket may include a tubular cavity. The tubular cavity extends from a surface of the pocket into a volume of the pocket. The surface may be an external surface of the pocket. The external surface of the pocket may be an external surface of the component.

The tubular cavity may extend fully through the pocket. The tubular cavity may taper along its length.

One of the solid walls may be a tubular wall having an interior surface and an exterior surface, wherein the exterior surface is surrounded by the further particles and the interior surface provides the tubular cavity which extends from an external surface of the component at least partially into the pocket.

The component may be a part of or all of seal segment for a turbine stage of a gas turbine engine. The seal segment may be part of a gas turbine engine.

The component may be a near net shape seal segment. The component may be a portion of the seal segment. For example, the component may be an abradable insert for a seal segment. The abradable insert may be elongate and curved along the longitudinal length thereof. The abradable may have a constant transverse cross section with respect to the longitudinal axis.

The tubular cavity may extend from an open end located on an in use radially outer surface thereof so as to provide fluid communication from a cooling air chamber into the pocket towards the main gas path.

The component may be made using a Direct Laser Deposition (DLD) process. Like other additive manufacturing techniques, components manufactured using DLD can be manufactured in different densities depending on the laser time and speed, and as such integral components with areas of differing densities can be manufactured.

The abradable section may be formed by the additive manufacturing process depositing material in that section at a lower density than in the adjacent portions. The forming process may otherwise be identical.

The abradable section may have a lattice pattern having walls defining a plurality of pockets. The walls may be formed in the same manner as the surrounding portions of the components. For example, in a direct laser deposition process, the powder is laid down in the pockets but not welded and is contained in the pockets by the manufacture of the walls around them. The subsequent heat treatment of the casing will sinter the powder in place but result in a much lower density of material in the pockets.

The pockets are filled with a less dense powder than the surrounding material, but with much greater temperature capability than current designs. This can reduce blade fin tip wear and also result in lower manufacturing and replacement costs.

In preferred embodiments, the abradable section may further include at least one radial cooling passage. The cooling passage may extend from the exterior of the case to allow air from a cooling system to cool the case.

The provision of the cooling passage may allow the casing to be cooled from the heat generated from friction contact between the blades and the abradable section.

Areas of heavy rub and oxidation can open up large gaps to the blade fin tips, allowing flow to leak over the blade and a resulting degradation of performance. Also, large gaps and overtip leakage flows can result in more heat being concentrated in the abradable section, thereby increasing the degradation rapidly in such areas. The provision of cooling passages can arrest this attack and therefore preserve performance that would otherwise be degraded.

In combination with the abradable portions, cooling passage(s) allow cooling air to be directed through the abradable portions to the points of greatest concern with regards to oxidation and potential deterioration.

Preferably the cooling passage is formed in the abradable section during the additive manufacturing process. This will be significantly cheaper and more flexible in terms of the shape and configuration of the cooling passage than the existing machined approach to making such passages.

The cooling passages may be blind passages which are sealed at the interior side of the case. Such blind passages are arranged to open up in the event of heavy abrasion and/or oxidation, resulting in cooling flow which is progressively fed to a particular area to slow the attack over the component lifecycle.

One or more of the cooling passages (which may include one or more of the blind passages) are tapered along their length. The widest portion of the cavity may be at the exterior of the component.

Such cooling arrangements may yield sizeable lifecycle cost benefits. In particular, by providing the cooling holes within the abradable section and providing for either blind or tapered (or blind tapered) holes, not only can the areas of concern be directly cooled, but the cooling can be designed to control the cooling flow through the lifecycle of the component, for example by allowing initially low cooling flows to be used, with increased flow only required on segments with deep rub/greater levels of oxidation. This allows the cooler or less-heavily rubbed segments to consume less cooling flow.

The gas turbine engine may include some, all or none of the above described optional or preferred features.

### Brief Description of the Drawings

Embodiments of the invention will now be described by way of example with reference to the accompanying drawings in which:
Figure 1 shows a portion of a known case showing the location of abradable lands and has already been described;
Figure 2 shows the structure of existing abradable lands and has already been described;
Figure 3 shows a ducted fan gas turbine engine in which embodiments of the invention are incorporated;
Figure 4 shows a portion of a case including abradable lands according to embodiments of the present invention;
Figures 5A and 5B show, respectively, front and side sections of an abradable portion according to an embodiment of the present invention;
Figure 6 shows the front section of an abradable portion according to a further embodiment of the present invention; and
Figure 7 shows the profiles of cooling holes which may be constructed within abradable portions of the present invention.
Figure 8 shows a flow diagram of the component build.

### Detailed Description and Further Optional Features of the Invention

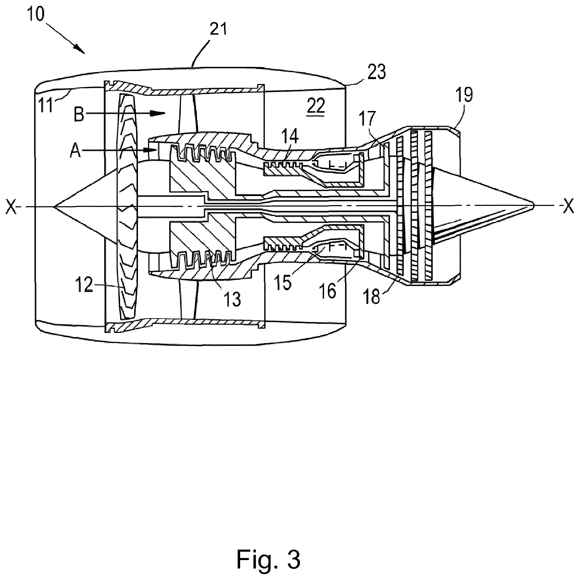

With reference to Figure 3, a ducted fan gas turbine engine incorporating the invention is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

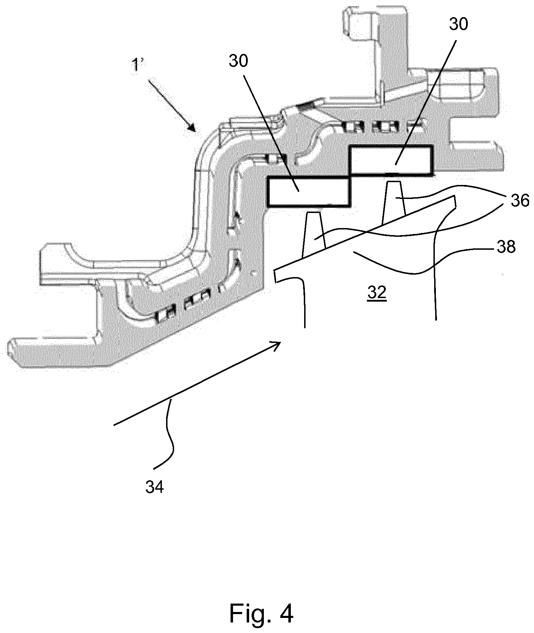

Figure 4 shows a seal segment 1' of the main gas flow path wall of a gas turbine engine such as that shown in Figure 3 in which abradable sections 30 according to embodiments of the invention have been incorporated (compare to Figure 1). The seal segment 1' sits radially outside of the rotor blades 32 and defines the main gas flow path 34 within the turbine section of the engine. To reduce over tip leakage, the radially outer portion of the turbine blades 32 may be provided with one or more fins 36 placed on a shroud 38. The shroud 38 is in the form of a platform located on the tip of the blade aerofoil. Each blade of the annular cascade of a given rotor stage includes a similar shroud such that adjacent blade tip shrouds sit proximate to one another and cooperate to provide a full rotating annulus. The fins 36 project radially outwards from the outer surface of the shroud 38 to a free end which opposes the seal segment. The fins have circumferential length so that the peripheral ends correspond to opposing adjacent shroud tip fins. Thus, in an assembled engine, the tips form one or more ring flanges extending radially towards the seal segment abradable portions 30. A small gap is provided in the cold build engine. When an engine is first run the fins rub into the abradable sections 30 to enhance sealing thereby cutting a running track into the abradable to provide as close a fit as possible. It will be appreciated that radial in the present context means that the fins 36 have a radial component but are not necessarily normal to the rotational axis of the rotor.

In the example shown there are two abradable lands 30, each one corresponding to an individual shroud tip fin 34. However, other configurations and numbers of fins are possible. The individual pockets shown in each land are a result of the lattice wall structure described in connection with Figure 2. It will be appreciated that other wall structures are possible and they may only comprise the external walls which bound the entirety of the abradable material in some instances. The extent of the abradable lands are fully circumferential to match the annular construction of the corresponding fins, however, adjacent seal segments may be separated by a peripheral boundary wall on the circumferential edges thereof. The axial extent of the lands is provided to accommodate any relative axial movement of the blades in use. Individual lands may be separated by a step and/or partitioning section of wall, or may be a continuous stretch of lower density material.

The component may be manufactured using an additive layer manufacturing, ALM, technique to create a portion of the seal segment 1' which includes the abradable lands 30. Additive layer manufacturing techniques includes several different methods of creating three dimensional in a layer-by-layer construction. One method often used in the aerospace industry is so-called direct laser deposition in which a successive layers of powder are laid down and selectively fused together by, for example, sintering using a laser. Modifying the scan pattern of the laser in successive layers allows a three dimensional object to be manufactured. Such methods are well known in the art.

It is possible, using an additive layer process, such as Direct Laser Deposition, DLD, to manufacture a seal segment 1' such that it has integrally formed abradable lands. In such a case, the seal segment 1' can be formed as a single unitary body without the need for subsequent machining and filling of a lattice or other land retaining structure. Alternatively, it is possible to manufacture an abradable section of a seal segment 1' which can be incorporated into the body of an existing seal segment 1' to provide either a new part, or a reconditioned one. The body may, for example, be a cast component which includes a cavity into which an abradable can be fixed.

In one example, an additive layer process is used to form a segment with abradable lands 30 already included. The creation of the integral abradable may be done with no lattice structure or sinter powder-fill as described in connection with Figures 2 and 3. The land formed by ALM may have a uniform density as a result of the powder density which is laid down in each layer, and the characteristics of the laser which fuses the particles. This density can be changed/optimised to suit a particular engine conditions and blade tip wear strip data. Providing an integral land in this way may reduce the weight and cost of the components, as well as yielding a performance improvement from better tip sealing. In this first example, the density of the land may be altered by changing the parameters of the radiation source, either by varying the scan time or characteristics of the beam.

In another example, the DLD manufacturing technique is used to create an abradable land by providing pockets in a body of the component which is filled with non- or partially fused powder. The pockets may be sealed with an outer wall which encloses the powder within the pocket.

To create an ALM seal segment 1', the walls of the seal segment pockets are created layer by layer during the build process. The pocket walls are those which define the pocket rather than forming the seal segment per se, although the walls may contribute to the body of the component at the same time as defining the pocket. The pocket walls may provide an external wall of the component or form any other part of the component which is adjacent to the abradable portion.

Due to the nature of an additive layer powder bed process in which layers of powder are laid down and sintered, the walls are surrounded by unfused powder. Hence, creating a closed pocket from solid walls of fused metallic particles will provide an infill of unfused powder. It will be appreciated that the encasement of the unfused powder may be complete in that the entirety of the volume is fully sealed. Alternatively, one or more powder retaining apertures may be provided in the pocket walls, if required or desired. Such holes may be provided to allow for in use cooling for example.

Hence, the volume within the pockets are filled with powder of the same material as the base metal of the component and pocket walls, but not welded. Powder laid down like this but not fused typically has a density between 40% and 60% of the surrounding fused "parent" metal body.

Once the build is complete, the component can be optionally removed from the powder bed and heated to sinter the powder within the pockets. During the heat process the particles are fused together to provide a lower density segment enclosed within the component body. The distribution of the powder within the pocket is substantially uniform throughout due to the uniform distribution of the particles as they are laid down. The skilled person will appreciate that the parameters of the heat treatment will be dependent on a number of variables and will need to be tailored to provide the required amount sintering for the pocketed powder.

The shape and volume of the pocket can be tailored to specific needs, but in certain embodiments, they could be made the same size and shape as known lattice structures. There is the option of providing part of a component such as a seal segment using the described technique. Thus, it is possible to provide blocks of abradable segment portions which can be inserted into existing seal segments as a replacement part.

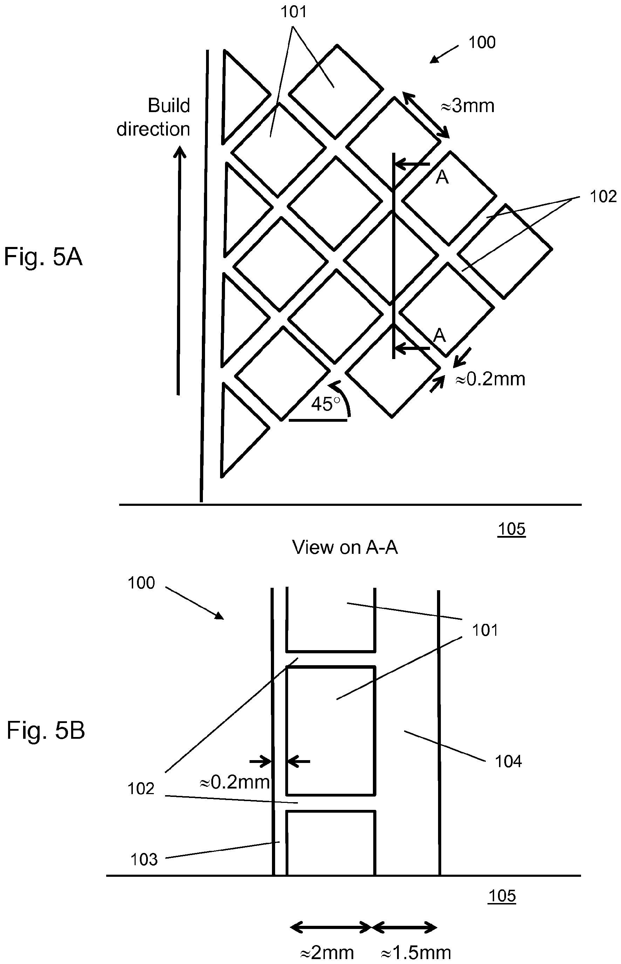

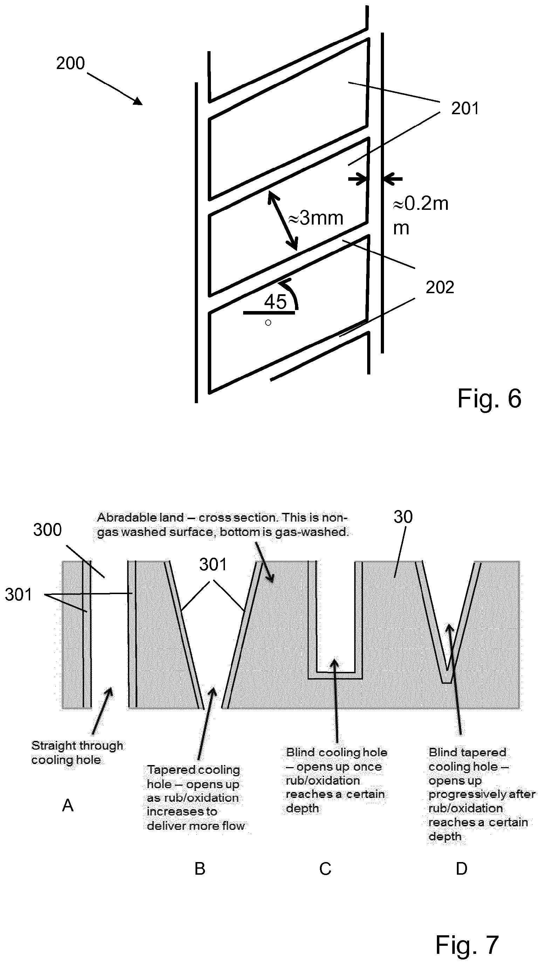

Figures 5 and 6 show two possible configurations for the abradable portions 100, 200 which may be manufactured using the described method. In both instances, the main body is a solid DLD-formed body, with the abradable portion being made up of a number of closed-cell volumes of trapped powder that, when heat treated, sinters in-situ to provide a porous body of lower density than parent body, but which is fused to the main body when in use and being abraded.

In Figure 5A, the abradable portion 100 is formed of a plurality of hollow powder-filled sections 101 or pockets. The powder-filled sections 101 shown in Figure 5A are diamonds separated by higher density/solid lattice walls 102. The build direction is bottom to top as shown in the drawings and as indicated by the arrow. Thus, the successive layers of powder are built up from a platen or powder bed 105, with each layer being selectively radiated and the particles fused in the desired shape for that layer.

The walls 102 are longitudinal with a longitudinal axis extending at a minimum angle of 45 degrees from the powder bed 105 upon which the component is manufactured to allow for the walls to be sufficiently supported from underneath.

The walls 102 have a nominal thickness of 0.2mm (with tolerances, between 0.1-0.3mm), whilst the sections 101 have a width of approximately 3mm.

Figure 5B shows a cross-section through the abradable portion 100 shown in Figure 5A along the line A-A. As shown in Figure 5b, the powder-filled sections 101 are capped at either end to contain the powder. The sections have an outer capping layer 103 which forms the gas washed surface of the segment which the blade will rub into and through. Nominally this will be 0.2mm with a preferable tolerance of 0.1mm to 0.3mm and a thicker rear section (approximately 1.5mm thick). The abradable depth of the portion is between 0.4 and 5mm, preferably between 1 and 3mm and, in the example shown, approximately 2mm.

The density of the main body and solid walls may be approximately 100% of the density of the underlying material with a very low porosity, whilst the density of the abradable powder portions is approximately 50%. It will be appreciated that the structure may include some vacancies and cracks due to internal stresses within the component.

Figure 6 shows an alternative embodiment in which the hollow powder-filled sections 201 of the abradable portion 200 are rhombus-shaped, again surrounded by solid walls 202 which are identical in their characteristics to the walls 102 described above. The cross-section of the embodiment shown in Figure 6 is identical to that shown in Figure 5B.

The material properties of the body, walls 202 and powder-filled sections 201 of the embodiment shown in Figure 6 are as described in relation to the embodiment shown in Figure 5

Cooling systems may be added into the abradable portions of the component. This will allow penetration of cooling air into the abradable and reduce the amount of cooling air required in comparison to that which is required when only the external surface of the component is cooled. Providing local cooling air can also reduce the deterioration characteristics of the abradable.

Figure 7 shows a selection of possible cross sections for cooling holes formed in the abradable portion 30 which provide different functionalities. A straight through cooling hole A is the simplest formation. A tapered cooling hole B opens up to provide increased cooling flow as the abradable portion is worn away or oxidised. A blind cooling hole C only opens up once the abrasion or oxidation has reached a certain depth. A blind tapered cooling hole D is a combination of the tapered cooling hole B and the blind cooling hole C and opens up progressively once the abrasion or oxidation has reached a certain depth.

In combination with the abradable portions, the cooling holes allow cooling air to be directed through the cooling portions to the points of greatest concern with regards to oxidation and component life. The cooling air will locally reduce the metal temperature and reduce the rate of part deterioration through oxidation. In this way the design will increase how long the part can last in the engine without need for refurbishment or scrapping. It also allows blind cooling holes (e.g. C or D in Figure 7) to be provided in the abradable portion 30, which will open up in the event of heavy abrasion and/or oxidation, meaning that cooling flow is progressively fed to a particular area to slow the attack over the component lifecycle.

Such cooling arrangements may yield sizeable lifecycle cost benefits. In particular, by providing the cooling holes within the abradable land 30 and providing for either blind or tapered (or blind tapered) holes, not only can the areas of concern be directly cooled, but the cooling can be designed to control the cooling flow through the lifecycle of the component, for example by allowing initially low cooling flows to be used, with increased flow only required on segments with deep rub/greater levels of oxidation. This allows the cooler or less-heavily rubbed segments to consume less cooling flow.

Areas of heavy rub and oxidation can open up large gaps to the blade fin tips, allowing flow to leak over the blade and degrading performance. Also, large gaps and overtip leakage flows put more heat into the segment abradable locally, so attack tends to increase rapidly in such areas. The cooling holes in the above embodiments can arrest this attack and therefore preserve performance that would otherwise be degraded.

The cooling holes are provided within the volume of un-fused powder by sintering a suitably shaped boundary wall 301 during the build phase.

The tubular wall may be any shape as required by the hole shape, either in section or length. Typically, the tubular wall will have a round section, being either uniform or tapering along its length. Thus, as shown in Figure 7, there are cylindrical, conical and frustoconical walls, but a given tubular may include a combination of these shapes in series and may be curved along its length. The tubular wall may include side walls and, where there is a blind hole, an end wall at the terminal end.

The presence of the tubular wall forms part of the envelope which bounds and defines the pocket. Thus, on one side of the wall are unfused particles of powder which are sintered and provide the abradable mass, whilst on the other are unfused particles which are removed to provide the cooling passage prior to the sintering heat treatment required for the abradable. It will be appreciated that the unfused particles within the pocket become fused after the build process and subsequent heat cycle.

The tubular wall may extend from an open end of an external surface into the pocket so as to provide a fluid pathway into the component body. The radially outer facing surface of the seal segment may provide a chamber or plenum for cooling air in use. Hence, the tubular wall may extend from an open end located on an in use radially outer surface thereof of the seal segment so as to provide fluid communication with the cooling air chamber and a flow of air into the pocket towards the main gas path side of the seal segment. It will be appreciated that the open end of the cooling passage in the abradable may be via connecting passage which extends through the main body of the component. The connecting passage may be in the form of an elongate passage, or a chamber or plenum enclosed within the body of the component.

The cavities which extend into the pocket may be formed within the lower density portions after the build process by machining, such as boring, a hole into the pocket after the unfused particles have been sintered in the post-build heat treatment.

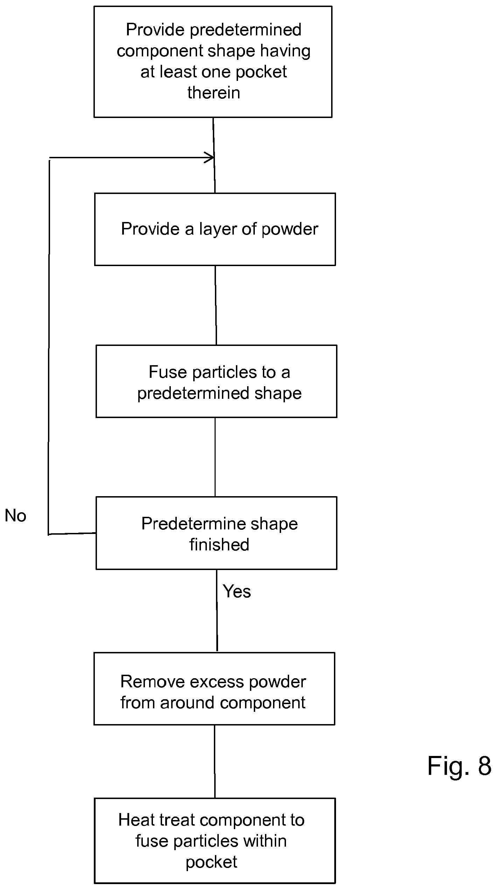

Figure 8 shows an example of the process for creating a component using the above described method(s). The first step is the provision of a predetermined shape which is to be created. The shape may be any which is desired and is not necessarily limited to one for a gas turbine engine. The predetermined shape is required to have an enclosed pocket in which the ALM powder can be captured during the build process. The walls which capture the un-fused particles may be entirely enclosed within the component shape, or include a wall which provides an external surface of the component. The shape may be devised and/or stored locally and provided to the ALM machine for the purpose of the build.

The ALM machine may be any which is suitable and will typically include some form of bed onto which the component can be built. To begin the build, a layer of powder is applied to the bed, either directly or on top of an existing layer of powder. The layer of powder is typically relatively thin, it being only a few particles deep and uniformly thick and dense across the expanse of the bed. Once deposited, the layer can be exposed to a suitable radiation source, such as laser, which selectively sinters, fuses, the particles together. The shape of the fused layer corresponds to the respective layer of the shape to be manufactured.

The process is repeated as is well known in the art until the component has been fully formed within a block of non-sintered powder.

Because the powder is laid down in individual full layers, the fused portions are surrounded by the non-sintered particles which exist in each of the layers. Typically this results in a powder cake or block having the components buried therein.

Where a space is enclosed by a wall in three dimensions, a pocket is formed. The enclosing wall may be any shape provided it is encloses a volume of powder. The shape could be irregular or regular and include polygonal or round or curved sides. If the pocket is such that the particles of powder cannot be removed with the remainder of the external non-sintered powder cake, it will be trapped within the pocket. Such powder typically has a density which is between 40% and 60% of the sintered parts. The density may be approximately 50%.

Once the predetermined shape (or shapes) has been formed within the powder block, the extraneous un-fused powder is removed from the exterior surfaces of the component, typically using mechanical or pneumatic means.

Following the removal of the particles, the component is subjected to a heat treatment to fuse the particles within the pocket(s) to provide the lower density area which is more readily abradable. The heat treatment will typically include a hot isostatic process in which the component is subjected to a heated and pressure cycle to compact the solid portions of the component and close any undesirable vacancies or cracks. Further heat treatments, for example, those to improve the microstructure of the metal are also possible. An additional or alternative specific heat treatment could be considered to improve the sintering of the particles within the pockets, but this is optional.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. For example, the above examples generally relate to a turbine section of a gas turbine engine. However, invention may be applicable to other areas of the engine. For example, the components which include the pockets may be used within a section of the compressor to provide an abradable liner.

Various changes to the described embodiments may be made without departing from the scope of the invention. It will be understood that the invention is not limited to the embodiments above-described and various modifications and improvements can be made without departing from the concepts described herein, as long as the resulting embodiment comprises at least all features of appended claim 1.

## Claims

1. A method of manufacturing a component for a gas turbine engine, the method including the step of:
forming a metallic body of a component by:
depositing successive layers of a metal powder on a bed;
progressively forming the shape of the metallic body within the layers of powder by selectively fusing particles of the metal powder after each layer has been deposited,
exposing the body to a heat treatment to fuse the particles of the powder within the pocket together,
wherein forming the shape of the metallic body includes creating an enclosed pocket of unfused particles (201) within the successive layers, the pocket being defined by walls (202) of fused particles so that the metallic body has a first density outside of the pocket and a second density which is lower than the first density within the pocket.

2. A method as claimed in claim 1, wherein the pocket includes an external wall (202) defining an internal volume and a tubular wall having an interior surface and an exterior surface, wherein the interior surface provides a tubular cavity which extends at least partially into the internal volume of the pocket.

3. A method as claimed in claim 2, wherein the tubular cavity extends fully through the pocket.

4. A method as claimed in claim 3, wherein the tubular cavity tapers along its length.

5. A method as claimed in any preceding claim, wherein the selective fusing of particles is achieved using a laser.

6. A method as claimed in any preceding claim, wherein the fused particles of the pocket are formed as part of a lattice of intersecting walls (202).

7. A method as claimed in any preceding claim, wherein the pocket is enclosed on all sides by the walls (202) and at least one side of the pocket provides an external surface of the in use component.

8. A method as claimed in claim 7, wherein the wall (202) which provides the external surface is between 0.1 mm and 0.3 mm thick.

9. A method as claimed in any preceding claim, wherein the component is a seal segment located radially outwards of a turbine rotor in use, wherein the pocket has a radial depth of between 0.4 mm and 5 mm.

10. A method as claimed in any preceding claim, wherein the walls are longitudinal with a longitudinal axis extending at a minimum angle of 45 degrees from the bed.

11. A method as claimed in any preceding claim, wherein the second density is between 40 and 60% of the first density.

12. A method as claimed in any preceding claim, wherein the walls (202) have a nominal thickness of between 0.1 mm and 0.3 mm.

13. A method as claimed in any preceding claim, wherein the pockets are approximately 3 mm wide.

## Patentansprüche

1. Verfahren zur Herstellung einer Komponente für einen Gasturbinenmotor, wobei das Verfahren den folgenden Schritt beinhaltet:
Bilden eines metallischen Körpers einer Komponente durch:
Abscheiden aufeinanderfolgender Schichten eines Metallpulvers auf einem Bett; progressives Ausbilden der Form des metallischen Körpers innerhalb der Pulverschichten durch selektives Verschmelzen von Partikeln des Metallpulvers nach erfolgter Abscheidung jeder Schicht,
Aussetzen des Körpers an eine Wärmebehandlung, um die Partikel des Pulvers innerhalb der Tasche miteinander zu verschmelzen,
wobei das Ausbilden der Form des metallischen Körpers das Erzeugen einer umschlossenen Tasche von nicht verschmolzenen Partikeln (201) innerhalb der aufeinanderfolgenden Schichten beinhaltet, wobei die Tasche durch Wände (202) von verschmolzenen Partikeln definiert ist, sodass der metallische Körper eine erste Dichte außerhalb der Tasche und eine zweite Dichte, die niedriger als die erste Dichte innerhalb der Tasche ist, aufweist.

2. Verfahren nach Anspruch 1, wobei die Tasche eine externe Wand (202), die ein internes Volumen definiert, und eine rohrförmige Wand mit einer Innenfläche und einer Außenfläche beinhaltet, wobei die Innenfläche einen rohrförmigen Hohlraum bereitstellt, der sich mindestens teilweise in das interne Volumen der Tasche erstreckt.

3. Verfahren nach Anspruch 2, wobei sich der rohrförmige Hohlraum vollständig durch die Tasche erstreckt.

4. Verfahren nach Anspruch, wobei sich der rohrförmige Hohlraum entlang seiner Länge verjüngt.

5. Verfahren nach einem vorhergehenden Anspruch, wobei das selektive Verschmelzen von Partikeln unter Verwendung eines Lasers erreicht wird.

6. Verfahren nach einem vorhergehenden Anspruch, wobei die verschmolzenen Partikel der Tasche als Bestandteil eines Gitters sich schneidender Wände (202) gebildet werden.

7. Verfahren nach einem vorhergehenden Anspruch, wobei die Tasche auf allen Seiten von den Wänden (202) umschlossen ist und mindestens eine Seite der Tasche eine externe Fläche der im Einsatz befindlichen Komponente bereitstellt.

8. Verfahren nach Anspruch 7, wobei die die externe Fläche bereitstellende Wand (202) zwischen 0,1 mm und 0,3 mm dick ist.

9. Verfahren nach einem vorhergehenden Anspruch, wobei die Komponente ein Dichtungssegment ist, das im Einsatz radial außerhalb eines Turbinenrotors befindlich ist, wobei die Tasche eine radiale Tiefe von zwischen 0,4 mm und 5 mm aufweist.

10. Verfahren nach einem vorhergehenden Anspruch, wobei die Wände longitudinal mit einer Längsachse sind, die sich unter einem Mindestwinkel von 45 Grad zu dem Bett erstreckt.

11. Verfahren nach einem vorhergehenden Anspruch, wobei die zweite Dichte zwischen 40 und 60 % der ersten Dichte beträgt.

12. Verfahren nach einem vorhergehenden Anspruch, wobei die Wände (202) eine nominelle Dicke von zwischen 0,1 mm und 0,3 mm aufweisen.

13. Verfahren nach einem vorhergehenden Anspruch, wobei die Taschen ungefähr 3 mm breit sind.

## Revendications

1. Procédé de fabrication d'un composant pour un moteur à turbine à gaz, le procédé comprenant l'étape de :
formation d'un corps métallique d'un composant par :
dépôt de couches successives d'une poudre métallique sur un lit ;
formation progressive de la forme du corps métallique à l'intérieur des couches de poudre par fusion sélective des particules de poudre métallique après le dépôt de chaque couche,
exposition du corps à un traitement thermique pour fusionner les particules de poudre les unes aux autres dans la poche,
dans lequel la formation de la forme du corps métallique comprend la création d'une poche fermée de particules non fusionnées (201) à l'intérieur des couches successives, la poche étant définie par des parois (202) de particules fusionnées de sorte que le corps métallique a une première densité à l'extérieur de la poche et une deuxième densité qui est inférieure à la première densité à l'intérieur de la poche.

2. Procédé selon la revendication 1, dans lequel la poche comprend une paroi externe (202) définissant un volume interne et une paroi tubulaire ayant une surface intérieure et une surface extérieure, dans lequel la surface intérieure fournit une cavité tubulaire qui s'étend au moins partiellement dans le volume interne de la poche.

3. Procédé selon la revendication 2, dans lequel la cavité tubulaire s'étend entièrement à travers la poche.

4. Procédé selon la revendication 3, dans lequel la cavité tubulaire se rétrécit sur sa longueur.

5. Procédé selon l'une quelconque des revendications précédentes, dans lequel la fusion sélective des particules est réalisée en utilisant un laser.

6. Procédé selon l'une quelconque des revendications précédentes, dans lequel les particules fusionnées de la poche sont formées en tant que partie d'un réseau de parois entrecroisées (202).

7. Procédé selon l'une quelconque des revendications précédentes, dans lequel la poche est fermée de tous les côtés par les parois (202) et au moins un côté de la poche fournit une surface externe du composant en service.

8. Procédé selon la revendication 7, dans lequel la paroi (202) qui fournit la surface externe a une épaisseur comprise entre 0,1 mm et 0,3 mm.

9. Procédé selon l'une quelconque des revendications précédentes, dans lequel le composant est un segment d'étanchéité situé radialement à l'extérieur d'un rotor de turbine en service, dans lequel la poche a une profondeur radiale comprise entre 0,4 mm et 5 mm.

10. Procédé selon l'une quelconque des revendications précédentes, dans lequel les parois sont longitudinales avec un axe longitudinal s'étendant à un angle minimum de 45 degrés par rapport au lit.

11. Procédé selon l'une quelconque des revendications précédentes, dans lequel la deuxième densité est comprise entre 40 et 60 % de la première densité.

12. Procédé selon l'une quelconque des revendications précédentes, dans lequel les parois (202) ont une épaisseur nominale comprise entre 0,1 mm et 0,3 mm.

13. Procédé selon l'une quelconque des revendications précédentes, dans lequel les poches ont une largeur d'environ 3 mm.
